## Europäisches Patentamt

## European Patent Office

## Office européen des brevets

(19)

(11) Veröffentlichungsnummer: **0 038 426**

**A2**

(12) **EUROPÄISCHE PATENTANMELDUNG**

(21) Anmeldenummer: **81102057.7**

(22) Anmeldetag: **19.03.81**

(51) Int. Cl.³: **C 09 D 5/02**
C 09 D 7/00, C 09 D 5/34

(30) Priorität: **27.03.80 DE 3011859**

(43) Veröffentlichungstag der Anmeldung:
**28.10.81 Patentblatt 81/43**

(84) Benannte Vertragsstaaten:
**AT BE CH DE FR GB IT LI NL SE**

(71) Anmelder: **HOECHST AKTIENGESELLSCHAFT**
**Postfach 80 03 20**
**D-6230 Frankfurt/Main 80(DE)**

(72) Erfinder: **Hilgenfeldt, Eckhard**
**Hermann-Löns-Strasse 43**
**D-6200 Wiesbaden(DE)**

(72) Erfinder: **Schrattenholz, Walter**
**Raiffeisenstrasse 18**
**D-6500 Mainz(DE)**

(72) Erfinder: **Knittel, Volker, Dr.**
**Heinrich-Zille-Strasse 36**
**D-6200 Wiesbaden(DE)**

(54) **Beschichtungsmasse mit einem Hydrokolloidzusatz und Verfahren zu ihrer Herstellung.**

(57) Die Erfindung betrifft eine Beschichtungsmasse wie einen kunstharzgebundenen Putz, eine plastische Masse oder eine Spachtelmasse auf der Basis von in Wasser dispergierbarem Bindemittel, Zuschlagstoffen, Verdickungsmittel und gegebenenfalls weiteren Zusätzen und Hilfsstoffen. Diese Beschichtungsmasse enthält ein kleinteiliges, zu mindestens 30 Gew.-% wasserunlösliches, quellfähiges organisches Hydrokolloid aus der Gruppe Polysaccharid-Polyalkylenoxid-, Polyvinyl- und Polyacrylderivate. Dieses Hydrokolloid ist insbesondere ein durch eine Reaktion mit einer chemischen Verbindung, durch Strahlung oder durch Wärme bedingte Vernetzung oder durch Pfropfung modifiziertes Hydrokolloid oder ein Hydrokolloid, dessen Substituenten einen Substitutionsgrad aufweisen, der den Grad der Wasserunlöslichkeit des Hydrokolloids bewirkt. Zu diesen Hydrokolloiden zählen bevorzugt vernetzte Cellulose- oder Stärkeether, vernetzte Polyvinylether, vernetzte Polyacrylamide, vernetzte Polyacrylsäure und deren Salze, vernetzte Copolymere auf Basis von Acrylsäure und/oder Acrylamid oder gepfropfte Stärkederivate.

Ferner betrifft die Erfindung ein Verfahren zur Herstellung einer Beschichtungsgmasse wie eines kunstharzgebundenen Putzes, einer plastischen Masse oder Spachtelmasse aus in Wasser dispergierbarem Bindemittel, Zuschlagstoffen, Verdickungsmittel und gegebenenfalls weiteren Zusätzen und Hilfsstoffen unter Zusatz des genannten Hydrokolloids.

HOECHST AKTIENGESELLSCHAFT
KALLE Niederlassung der Hoechst AG

Hoe 80/K 015          - 1 -          17. März 1981
                                     WLK-Dr.I.-dg


Beschichtungsmasse mit einem Hydrokolloidzusatz und
Verfahren zu ihrer Herstellung


Die Erfindung betrifft eine Beschichtungsmasse wie einen
kunstharzgebundenen Putz, eine plastische Masse oder eine
Spachtelmasse mit einem Verdickungsmittel, das ein quellfähiges organisches Hydrokolloid enthält oder daraus besteht und ein Verfahren zu ihrer Herstellung.


Diese Beschichtungsmassen werden insbesondere für den
Schutz und die Gestaltung von Wänden und Decken, zum
Glätten und Füllen von Rissen oder Unebenheiten oder allgemein zum Gestalten von Formen und Oberflächen im Baugewerbe oder auch beim Heimwerker in zunehmendem Maße verarbeitet. Man unterscheidet nach Putzart und Putzweise in
Kratzputz, Reibeputz, Rillenputz, Buntstein-Putz, Spritzputz und Modellier-Putz. Sie enthalten im allgemeinen
/siehe dazu beispielsweise "Kunstharzputze", Richtlinien
der Europäischen Union für das Agrément im Bauwesen
(UEAtc), herausgegeben von der Bundesanstalt für Materialprüfung (BAM) - Berlin im Februar 1978, oder "Putze aus
Mörteln mit organischen Bindemitteln" (kunstharzgebundene
Putze), Vorlage zum Norm-Entwurf DIN 18 550, Teil 3 vom
September 1978_7 als Bindemittel eine wäßrige Kunststoffdispersion, einen körnigen Zuschlag und Zusätze wie Verdickungsmittel, Stabilisatoren, Dispergierhilfsmittel,
Weichmacher, Fungizide und/oder Pigmente. Man bringt diese
Beschichtungsmassen meist mit einer Glättkelle, einer Rolle
oder durch Spritzen in mehr oder weniger dicker Schicht auf
den Untergrund, beispielsweise eine Wand, auf und model-

HOECHST AKTIENGESELLSCHAFT
KALLE Niederlassung der Hoechst AG

- 2 -

liert und/oder glättet häufig unmittelbar nach dem Auftrag
mit verschiedensten Werkzeugen wie Rolle, Schwamm, Bürste,
Spachtel, Kelle oder Glättscheibe, um bestimmte Oberflächeneffekte oder Strukturen zu erzielen. Eine derartig erzeugte
Strukturierung sollte beispielsweise bis zum Trocknen und
damit Festwerden der aufgebrachten Beschichtung weder
nivellieren noch an senkrechten Flächen ablaufen, d.h.
die Strukturierung der Oberfläche muß nach der Erzeugung
möglichst "standfest" bleiben, nachdem sie während des
pastösen Zustands der Beschichtungsmasse erzeugt wurde.

Um den Beschichtungsmassen eine gute rheologische Verarbeitbarkeit zu verleihen, d.h. die Anwendung und Bearbeitung der Beschichtungsmassen zu erleichtern, die von
der Praxis geforderten Effekte erzielen zu können und
bestimmte physikalische Eigenschaften zu verbessern, wird
ihnen meistens bereits vom Hersteller ein Verdickungsmittel
zugesetzt. Die Verdicker haben dabei u.a. neben der Beeinflussung der rheologischen Eigenschaften auch die Funktion,
ein gutes Wasserrückhaltevermögen zu zeigen, d.h. Beschichtungsmassen ohne gute Wasserrückhaltung "brennen"
auf den üblicherweise vorliegenden saugenden Untergründen
"auf", sie verlieren dann durch zu raschen Wasserentzug
zu schnell ihre Geschmeidigkeit, so daß die Bearbeitung
erschwert ist und beispielsweise Risse auftreten können.
Aus dem Stand der Technik sind dazu beispielsweise die
folgenden Lehren bekannt geworden:

In der DE-PS 565 267 wird ein Verfahren zur Herstellung
einer Überzugmasse für Überzüge auf porösen, saugfähigen

HOECHST AKTIENGESELLSCHAFT
KALLE Niederlassung der Hoechst AG

- 3 -

Unterlagen beschrieben, bei dem Cellulosederivatlösungen
mit wäßrigen Lösungen wasserlöslicher organischer filmbildender Kolloide in Gegenwart von Weichmachern und
gegebenenfalls weiteren Zusätzen emulgiert werden. Als
Cellulosederivatlösungen werden Nitrocellulose-, Acetylcellulose-, Ethylcellulose- oder Benzylcellulose-Lösungen
in organischen Lösemitteln genannt, als wasserlösliche
organische filmbildende Kolloide Methylcellulose, Polyvinylalkohol, Gelatine, Leim- und Stärkeabkömmlinge. Zu
den nicht-zwingend zugesetzten Stoffen gehören Farbstoffe,
Harze, Füllstoffe, Netzmittel und Dispergierhilfsmittel.

Aus der DE-PS 753 233 ist eine aus Faserstoffen, wasserlöslichen Celluloseethern und gegebenenfalls pulvrigen
Füllstoffen bestehende Anstrichmasse bekannt, deren Faserstoffgehalt mindestens 30 % beträgt. Als Celluloseether
werden Alkylcellulosen, Hydroxyalkylcellulosen und deren
Mischether und Celluloseethercarbonsäuren aufgeführt, als
Faserstoffe Zellstoffasern wie Holzschliff oder Holzmehl
und als Füllstoffe Gips oder Kaolin.

Die Putzmörtel- und Spachtelmasse für Bauzwecke gemäß der
DE-PS 868 572 besteht neben Wasser im wesentlichen aus
einem wasserlöslichen Celluloseether wie Methyl-, Ethyl-
oder Carboxymethylcellulose und anorganischen Füllstoffen
wie Kreide oder Sandmaterial. Zusätzlich kann diese Masse
noch pflanzliche, tierische, mineralische oder synthetische
Faserstoffe, hydraulische Bindemittel wie Zement oder Gips
und/oder Emulsionen vom Typ Öl-in-Wasser wie Plast- oder
Asphaltemulsionen enthalten.

HOE·CHST  AKTIENGESELLSCHAFT
KALLE  Niederlassung der Hoechst AG

- 4 -

In der DE-AS 12 24 191 wird ein Putz für Mauern aus einem
synthetischen organischen Bindemittel und einem körnigen
Zuschlag beschrieben, wobei das Bindemittel aus Polyvinylester mit einem Zusatz von 10 bis 20 % Celluloseether besteht; ein solcher Putz soll nach dem Aufbringen auf eine
Wand und dem Trocknen eine rauhe, reliefartige Oberfläche
aufweisen.

Aus der DE-AS 12 74 023 ist ein Verfahren zur Herstellung
von Putzmörtel aus Wasser, einem feinkörnigen Füllmaterial
und einem wasserlöslichen Cellulosederivat bekannt, bei
dem das Cellulosederivat teilweise durch ein synthetisches
anorganisches Gel ersetzt wird. Als weiteres Bindemittel
kann dieser Putzmörtel auch eine wäßrige Dispersion von
Polymeren auf Vinylacetat-Basis enthalten.

Die Putz- und Spachtelmasse nach der DE-OS 22 09 283 enthält Wasser, wasserunlösliche körnige Ergänzungsstoffe
wie Sand, Gips oder Kalkstein, feinkörniges Material wie
Kaolin, Bentonit oder Kieselgur, organische Stoffe als
Bindemittel wie eine Mischung aus wasserlöslichen Cellulosederivaten und wasserunlöslichen organischen Verbindungen
und kurze, dünne, dauerhaft federnde Drähte, Fäden oder
Fasern aus einem wasserunlöslichen Material, das Wasser
nicht absorbieren oder aufsaugen kann. Als für die letztgenannte Komponente geeignete Materialien werden Glas,
Polyacrylate, Polyamide, Acrylnitrite, Polyester, Polyurethane oder Metalle wie Messing, Aluminiumbronze oder
Stahl aufgeführt. Zusätzlich kann diese Masse auch noch
Fasern aus Cellulose, Keratin oder Asbest enthalten. Eine aus diesen Massen erzeugte Schicht soll eine verminderte
Neigung zum Fließen, Einsinken und Schrumpfen zeigen.

In der DE-OS 24 26 188 wird ein wäßriges Anstrich-, Überzugs- und Beschichtungsmittel beschrieben, das Kurzfasern
mit hohem Fibrillierungsgrad aus wasser-, alkali- und
säureunlöslichen thermoplastischen Polymeren enthält.
Diese Kurzfasern bestehen aus Olefinpolymerisaten wie
Polyethylen oder Polypropylen, Polymethacrylsäuremethylester oder Polyvinylhalogeniden wie Polyvinylchlorid oder
Polyvinylidenchlorid; sie werden Anstrichmitteln, Klebstoffen oder kunstharzgebundenen Putzen als Verdickungsmittel zugesetzt und dienen als Ersatz für wasserlösliche
Verdickungsmittel wie Celluloseether, Polyvinylpyrrolidon,
Polyacrylate, Kasein oder Stärke oder für wasserunlösliche
Verdickungsmittel wie feinteiligem $SiO_2$, Asbestfasern oder
Montmorrilonit.

Aus der US-PS 4,039,492 ist eine Beschichtungszusammensetzung bekannt, die 1 bis 15 Gew.-% eines wasserdispergierbaren Bindemittels, 40 bis 95 Gew.-% eines feinverteilten Füllstoffs und 0,5 bis 20 Gew.-% eines fasrigen
Füllstoffs aus Polyolefinen enthält. Zusätzlich kann diese
Zusammensetzung auch noch Pigmente und/oder von 0,1 bis
10 Gew.-% eines Verdickungsmittels aus einem Celluloseether
oder aus natürlichen Gummen enthalten. Der fasrige Füllstoff soll als Ersatz für Asbestfasern geeignet sein.

Die aus dem Stand der Technik bekannten Zusätze, insbesondere die bekannten Verdickungsmittel, reichen oftmals

HOECHST AKTIENGESELLSCHAFT
KALLE Niederlassung der Hoechst AG

- 6 -

allein nicht aus, um die einleitend dargestellten Anforderungen an die Beschichtungsmasse vollständig zu
erfüllen, so daß häufig Kombinationen mehrerer Verdicker
oder zusätzliche Hilfsmittel wie Fasern erforderlich
sind, die teilweise dann Einfluß auf andere wichtige
Eigenschaften der Beschichtungsmassen nehmen.

Aufgabe der vorliegenden Erfindung ist es deshalb, eine
Beschichtungsmasse vorzuschlagen, die eine verbesserte
"Standfestigkeit" aufweist, ohne daß die übrigen Eigenschaften der bekannten Beschichtungsmassen negativ beeinflußt werden.

Die Erfindung geht aus von einer Beschichtungsmasse wie
kunstharzgebundenem Putz, plastischer Masse oder Spachtelmasse auf der Basis von in Wasser dispergierbarem Bindemittel, Zuschlagstoffen, Verdickungsmittel und gegebenenfalls weiteren Zusätzen und Hilfsstoffen. Die erfindungsgemäße Beschichtungsmasse ist dadurch gekennzeichnet, daß
sie ein kleinteiliges, zu mindestens 30 Gew.-% wasserunlösliches, quellfähiges organisches Hydrokolloid aus der
Gruppe Polysaccharid-, Polyalkylenoxid-, Polyvinyl- und
Polyacrylderivate enthält.

Diese, bevorzugt zu mindestens 50 Gew.-% wasserunlöslichen,
Hydrokolloide weisen insbesondere eine durch eine Reaktion
mit einer chemischen Verbindung, durch Strahlung oder
durch Wärme bedingte Vernetzung auf, sind durch eine
Pfropfung modifiziert worden oder tragen Substituenten
mit einem Substitutionsgrad, der den Grad der Wasserun-

HOECHST AKTIENGESELLSCHAFT
KALLE Niederlassung der Hoechst AG

- 7 -

löslichkeit des Hydrokolloids bewirkt. Zu diesen Hydrokolloiden zählen bevorzugt vernetzte Cellulose- oder
Stärkeether, vernetzte Polyvinylether, vernetztes Polyacrylamid, vernetzte Polyacrylsäure und deren Salze, vernetzte Copolymere auf Basis von Acrylsäure und/oder Acrylamid, gepfropfte Stärkederivate oder Celluloseether mit
einem so niedrigen oder hohen Substitutionsgrad, daß sie
noch nicht vollständig wasserlöslich oder bereits wieder
mindestens teilweise wasserunlöslich sind. Beispiele für
solche Hydrokolloide werden in den folgenden Schriften
aufgeführt:

In der DE-OS 20 48 721 durch Strahlung vernetzte Polyalkylenoxide; in der DE-AS 16 42 072 (= US-PS 3,670,731)
jeweils durch chemische Vernetzungsmittel vernetzte Polyacrylamide, Alkalimetallsalze von hydrolysierten Polyacrylamiden und Alkalimetallsalze von Polystyrolsulfonaten;
in der DE-OS 16 17 998 (= US-PS 3,669,103) jeweils durch
chemische Vernetzungsmittel vernetzte Poly-N-vinylpyrrolidone, Polyacrylamide, Polyacrylsäuren und Polyglykole;
mit Epichlorhydrin vernetzte Salze der Carboxymethylcellulose in der DE-AS 19 12 740 (= US-PS 3,589,364); in
der US-PS 2,639,239 oder der DE-OS 23 14 689 (= US-PS
3,723,413) durch Wärmeenergie vernetzte Alkalimetallsalze
der Carboxymethylcellulose; durch Bisacrylamidderivate
oder andere Vernetzungsmittel vernetzte Celluloseether
nach der DE-OS 23 57 079 (= US-PS 3,936,441) oder der
DE-OS 25 19 927 (= US-PS 4,068,068); in der DE-AS
22 64 027 jeweils durch Strahlung vernetzte Polysaccharidderivate, Polyethylenoxide und Polyvinylderivate wie Polyvinylalkohol; in der DE-OS 26 34 539 (= US-PS 4,117,222) durch Bisacrylamidderivate oder andere Vernetzungsmittel vernetzte Stärkeether; die nach einem speziellen Verfahren hergestellten Alkalimetallsalze von Carboxymethylcellulose nach der DE-OS 21 51 973 (= US-PS 3,678,031); die einen Substitutionsgrad (D.S.) unter 0,3 aufweisenden Salze der Carboxymethylcellulose in der DE-PS 10 79 796 oder DE-AS 11 51 474; die durch Wärmeenergie vernetzten Carboxyalkylcellulosen der DE-PS 10 37 076 (= GB-PS 725,887); die ionischen Komplexe aus mindestens 3-wertigen Metallkationen und Polyacrylsäure oder Säuregruppen tragenden Stärke- oder Cellulosederivaten in der DE-OS 26 09 144; Cellulosepfropfpolymerisate in der DE-OS 25 16 380 oder DE-OS 25 28 555; Alkalimetall-Carboxylat-Salze von Stärke-AcrylnitrilPfropf-Copolymeren in der US-PS 3,661,815; vernetzte Pfropfpolymerisate von Polysacchariden in der DE-OS 26 47 420; durch chemische Vernetzungsmittel vernetzte Carboxyalkylcellulosen in Faserform nach der DE-OS 28 23 736; Hydrolyseprodukte von Polyacrylnitrilen oder Copolymeren auf Basis von Acrylnitril in der DE-OS 29 03 267; vernetzte Polyvinylether in der DE-OS 29 23 435 und vernetzte und veretherte Polyvinylderivate in der DE-OS 29 23 430.

Unter dem Begriff kleinteilige Hydrokolloide sind insbesondere solche zu verstehen, die als Feinstpulver, Pulver, Fasern oder Granulate bis zu einer Größe von etwa 10 mm vorliegen, die Mindestgröße sollte etwa 0,01 mm möglichst nicht unterschreiten; die Verbindungen quellen bei Wechselwirkungen mit wäßrigen Flüssigkeiten, insbesondere solchen mit mehr als 50 Gew.-% Wassergehalt, oder mit anderweitig mit ihnen in Kontakt tretenden Wassermolekülen
(z. B. Wasserdampf). Sie werden häufig durch eines oder
mehrere der folgenden Parameter charakterisiert:

WRV     Wasserrückhaltevermögen des quellfähigen Hydrokolloids in Gew.-%, gemessen gegen 1.600-fache Erdbeschleunigung, bezogen auf seinen wasserunlöslichen
        Anteil; das WRV wird nach Eintauchen der Probe in
        Wasser bestimmt,

WUA     wasserunlöslicher Anteil im quellfähigen Hydrokolloid in Gew.-%,

DS      Substitutionsgrad, d.h. bei Polymeren die Anzahl
        von Substituenten pro Polymereneinheit, über das
        ganze Polymere gemittelt; beispielsweise kann die
        Anzahl der substituierten Hydroxylgruppen an den
        Anhydro-ᴅ-glukose-Einheiten eines Polysaccharids
        wie Cellulose oder Stärke im Mittel zwischen 0,0
        und 3,0 liegen oder bei Polyvinylalkohol zwischen
        0,0 und 1,0.

Die in der erfindungsgemäßen Beschichtungsmasse verwendeten
quellfähigen Hydrokolloide haben WUA-Werte von mindestens
30, bevorzugt von mindestens 50, und WRV-Werte von mindestens 500, bevorzugt von mindestens 1.000; eine Meßmethode
zur Bestimmung dieser Parameter kann beispielsweise der
DE-AS 19 12 740 (= US-PS 3.589.364) entnommen werden. Der
Substitutionsgrad ist bei den verschiedenen Hydrokolloiden
stark unterschiedlich, da er sich auf unterschiedliche Polymereinheiten bezieht.

HOECHST AKTIENGESELLSCHAFT
KALLE Niederlassung der Hoechst AG

- 10 -

Die erfindungsgemäßen Beschichtungsmassen enthalten als
Grundkomponenten eine Bindemitteldispersion aus einem
in Wasser dispergierten Kunstharz und Zuschlagstoffe
wie weiße Pigmente, z. B. $TiO_2$, Lithopone oder Kreide,
und/oder Füllstoffe wie z. B. Calciumcarbonate, Quarzmehle, Schwerspat, Faserstoffe, Granulate, die mehr oder
weniger strukturgebend sind. Zu den Kunstharzen der Bindemitteldispersion zählen filmbildende Homo- oder Copolymerisate aus Acrylsäureestern, Methacrylsäureestern, Acryl-
und Methacrylsäure, Styrol, Ethylen, Butadien, Acrylnitril,
Vinylacetat, Vinylpropionat, Vinylchlorid, Vinylestern von
langkettigen verzweigten Carbonsäuren oder Maleinsäureestern. Bereits beim Hersteller oder vom Verbraucher
können die Beschichtungsmassen auch mit farbigen Pigmentteigen angefärbt werden, die im allgemeinen ein anorganisches oder organischer Pigment, ein Tensid, ein organisches Lösemittel und/oder Wasser und Konservierungsmittel
enthalten. Um die Verarbeitungseigenschaften, die Lagerfähigkeit oder die Haftung der Beschichtungsmassen zu beeinflussen, werden diesen verschiedenste Hilfsstoffe und
Zusätze beigemischt, dazu zählen neben den üblichen Verdickungsmitteln wie wasserlöslichen Celluloseethern (z. B.
Alkylcellulosen, Alkyl-hydroxyalkylcellulosen, Cellulosecarbonsäuren oder ihren Salzen oder Hydroxyalkylcellulosen),
Polyacrylaten, Polyurethanen oder Bentoniten, die auch in
der erfindungsgemäßen Beschichtungsmasse neben den quellfähigen, organischen Hydrokolloiden vorhanden sein können,
beispielsweise auch Stabilisatoren, Dispergierhilfsmittel,
Weichmacher, Konservierungsmittel, organische Lösemittel,
Entschäumer und/oder Tenside. Die Gewichtsanteile der wesentlichen Beschichtungskomponenten liegen bei etwa
2 bis 30 Gew.-Teilen für das Bindemittel (Kunstharz-
Feststoffgehalt), bei etwa 30 bis 85 Gew.-Teilen für
den Zuschlagstoff, bei etwa 10 bis 40 Gew.-Teilen Wasser
und bei etwa 0,02 bis 2 Gew.-Teilen, insbesondere 0,05
bis 1 Gew.-Teil, für das erfindungsgemäß zugesetzte
quellfähige organische Hydrokolloid, bezogen auf 100
Gew.-Teile der gebrauchsfertigen Beschichtungsmasse; die
Anteile der übrigen Hilfsstoffe und Zusätze liegen im
allgemeinen unter etwa 5 Gew.-Teilen.

Die erfindungsgemäßen Beschichtungsmassen können auf
dem Baustoffgebiet als kunstharzgebundene Putze, plastische
Massen oder Spachtelmassen Verwendung finden. Sie weisen
eine gegenüber dem Stand der Technik verbesserte "Standfestigkeit" auf, d.h. dicke Schichten sacken beispielsweise an senkrechten Stellen nicht ab und modellierte
Effekte bleiben fixiert. Diese Beschichtungsmassen zeigen
aber auch das für die Anwendung auf saugenden Untergründen
erforderliche Wasserrückhaltevermögen, das gegebenenfalls
noch durch den Zusatz üblicher Verdicker erhöht werden
kann; sie weisen auch eine verarbeitungsgerechte Konsistenz
auf. Ein weiterer Vorteil der erfindungsgemäßen Beschichtungsmassen ist auch ihre verringerte Schwundneigung beim
Trocknen, wodurch sie nicht oder weniger stark einfallen
und zur Rißbildung neigen; dadurch lassen sich beispielsweise größere Schichtdicken erzielen.

Zur Beurteilung der Verarbeitungseigenschaften der erfindungsgemäßen und der zum Vergleich aus dem Stand der

HOECHST AKTIENGESELLSCHAFT
KALLE  Niederlassung der Hoechst AG

- 12 -

Technik herangezogenen Beschichtungsmittel wurden die
folgenden Untersuchungsmethoden eingesetzt:

Rheologie der Beschichtung

Auf einem Stück dimensionsstabiler Pappe wird ein Keil
aus dem Beschichtungsmittel aufgebracht, der 4 cm breit,
15 cm lang und von 0 stetig ansteigend maximal 1 cm dick
ist. Nach einer Trocknungszeit von 24 h wird die Struktur
des Keils beurteilt.

Messung der Wasserretention

In einem handelsüblichen Meßgerät für die Wasserretention
von Beschichtungen (der Firma Venema) wird die Zeit in
sec bestimmt, die das in der Beschichtungsmasse enthaltene
Wasser benötigt, um die Masse zu verlassen; je länger
dieser Zeitraum dauert, desto besser ist die Wasserretention der Beschichtungsmasse bzw. der die Wasserretention
speziell verursachenden Komponenten der Beschichtungsmasse.
Zur Messung wird auf einer plattenförmigen Elektrode einer
Fläche von 150 · 220 mm$^2$ eine Schicht der Beschichtungsmasse aufgebracht, zur Konstanthaltung der Meßtemperatur
wird die Plattenelektrode mit Wasser gekühlt. Auf die
Beschichtungsmasse wird ein Papierstück gelegt und auf
dieses eine Elektrode mit scheibenförmiger Grundfläche
eines Durchmessers von 38 mm. Ein die beiden Elektroden
verbindendes Ampèremeter zeigt bei Beginn der Messung
einen Strom von 0 mA, die Zeitmessung mit einer Stoppuhr
ist dann beendet, wenn das Meßgerät einen Strom von 0,5 mA
anzeigt.

H O E C H S T   A K T I E N G E S E L L S C H A F T
KALLE   Niederlassung der Hoechst AG

- 13 -

Messung des Schwunds

In einen Kunststoffring eines Durchmessers von 8 cm wird das Beschichtungsmaterial in einer Schichtdicke von 0,5 mm eingebracht, und nach 24 h Trocknungszeit wird der Schwund und das Aussehen der Probe beurteilt.

Beispiel 1 und Vergleichsbeispiel V 1

Durch Vermischung der folgenden Komponenten wird eine Spachtelmasse für Innenwände von Räumen hergestellt, wobei im Vergleichsbeispiel V 1 als Verdickungsmittel ein Gemisch aus Methyl-hydroxyethylcellulose (MHEC) einer Viskosität (nach Höppler in 2 %iger wäßriger Lösung bei 20$^{\circ}$C) von etwa 6.000 mPa·s und einem wäßrigen Bentonitgel mit 10 Gew.-% Feststoffgehalt und im erfindungsgemäßen Beispiel als quellfähiges Hydrokolloid in einer Teilchengröße von kleiner etwa 0,5 mm eine mit Bisacrylamidoessigsäure vernetzte Natrium-carboxymethylcellulose eines WRV von etwa 6.700, eines WUA von etwa 64 und eines DS von etwa 1,0 eingesetzt werden.

HOECHST AKTIENGESELLSCHAFT
KALLE Niederlassung der Hoechst AG

- 14 -

| Komponenten | Gew.-Teile im | |
| --- | --- | --- |
| | Vergl.Bsp. V 1 | Bsp. 1 |
| Wasser | 172 | 190 |
| Konservierungsmittel auf Basis von N-Methyl-chloracetamid | 1 | 1 |
| Entschäumer auf Mineralölbasis | 1 | 1 |
| MHEC | 5 | - |
| quellfähiges Hydrokolloid | - | 4 |
| 10 Gew.-%ige wäßrige NaOH-Lösung | 1 | 1 |
| Bentonitgel | 10 | - |
| Quarzsand, fein | 600 | 600 |
| Calcit, 15 μm Durchmesser | 150 | 150 |
| 50 Gew.-%ige wäßrige Copolymerisat-Dispersion (aus Vinylacetat und Vinylestern verzweigter Carbonsäuren mit tertiärer Carboxylgruppe und $C_9$ bis $C_{11}$-Kohlenwasserstoffresten) | 100 | 100 |
| Testbenzin | 5 | 5 |

Die Beschichtungsmasse nach Vergleichsbeispiel V 1 zeigt im Beschichtungskeil ein Nachfließen an den Kanten und ist leicht nivelliert. Der Beschichtungskeil aus der Beschichtungsmasse nach Beispiel 1 bleibt hingegen scharfkantig bestehen. Die Wasserretentionswerte sind 36 sec (V 1) bzw. 39 sec (Bsp. 1), d.h. es tritt eine leichte Verbesserung der Wasserretention auf. Die bei der Schwundmessung zu beobachtenden Merkmale sind: Krustenbildung an der Oberfläche, unterhalb der Oberfläche noch weich; einzelne Risse; Schicht fällt ein, ist um bis 50 % dünner (bei V 1); praktisch

HOECHST AKTIENGESELLSCHAFT
KALLE Niederlassung der Hoechst AG

- 15 -

durchgetrocknet, rißfrei, geringerer Schwund als bei
V 1 (Bsp. 1).

Beispiele 2, 3 und Vergleichsbeispiel V 2

Durch Vermischung der folgenden Komponenten wird ein
Reibeputz hergestellt, wobei im Vergleichsbeispiel V 2
als Verdickungsmittel eine Methyl-hydroxyethylcellulose
(MHEC) einer Viskosität von etwa 200 mPa·s und in den
erfindungsgemäßen Beispielen als quellfähiges Hydrokolloid
eine mit Bisacrylamidoessigsäure vernetzte Natrium-carboxymethylcellulose eines WRV von etwa 2.000, eines WUA von
etwa 72 und eines DS von etwa 0,8 in einer Teilchengröße
von kleiner etwa 0,3 mm (Beispiel 2) bzw. eines WRV von
etwa 6.700, eines WUA von etwa 64 und eines DS von etwa
1,0 in einer Teilchengröße von kleiner etwa 0,5 mm (Beispiel 3) eingesetzt werden.

|  | Gew.-Teile im | | |
| Komponenten | Vergl.Bsp. V2 | Bsp. 2 | Bsp. 3 |
| --- | --- | --- | --- |
| Wasser | 88 | 88 | 88 |
| Konservierungsmittel auf Basis von N-Methyl-chloracetamid | 2 | 2 | 2 |
| Entschäumer auf Mineralölbasis | 2 | 2 | 2 |
| MHEC | 4 | – | 2 |
| quellfähiges Hydrokolloid | – | 4 | 1 |
| konz. wäßrige $NH_3$-Lösung | 1 | 1 | 1 |
| $TiO_2$ | 50 | 50 | 50 |
| Calcit, 5 $\mu$m Durchmesser | 25 | 25 | 25 |
| Quarzmehl | 25 | 25 | 25 |

HOECHST AKTIENGESELLSCHAFT
KALLE Niederlassung der Hoechst AG

- 16 -

| Komponenten | Gew.-Teile im | | |
| --- | --- | --- | --- |
| | Vergl.Bsp. V2 | Bsp. 2 | Bsp. 3 |
| 50 Gew.-%ige wäßrige Copolymeri-sat-Disperion (aus Vinylacetat und Vinylestern verzweigter Carbonsäuren mit teriärer Carb-oxylgruppe und $C_9$- bis $C_{11}$-Kohlen-wasserstoffresten) | 160 | 160 | 160 |
| Butyldiglykolacetat | 4 | 4 | 4 |
| Testbenzin | 4 | 4 | 4 |
| Quarzsand, 0,1 mm | 450 | 450 | 450 |
| Quarzsand, 0,2 - 0,3 mm | 100 | 100 | 100 |
| Quarzkies-Rundkorn, 1 - 2,2 mm | 85 | 85 | 85 |

Die erfindungsgemäßen Reibeputze lassen sich gegenüber dem Putz des Vergleichsbeispiels mit der Glättkelle leichter auf Unterlagen aufbringen, sie sind geschmeidiger, der Reibeeffekt läßt sich besser erarbeiten (ausreiben) und die Struktur der Oberfläche wirkt markanter. Die Wasserretentionswerte sind 70 sec (V 2), 54 sec (Bsp. 2) und 45 sec (Bsp. 3), d.h. die Wasserretention ist in den erfindungsgemäßen Beschichtungsmassen gegenüber der Vergleichsmasse zwar erniedrigt, sie bewegt sich aber immer noch in einem für die Praxis ausreichenden Bereich.

H O E C H S T   A K T I E N G E S E L L S C H A F T
KALLE  Niederlassung der Hoechst AG

- 17 -

Beispiel 4 und Vergleichsbeispiel V 3

Durch Vermischung der folgenden Komponenten wird ein Rollputz hergestellt, wobei im Vergleichsbeispiel V 3 als
Verdickungsmittel eine Methyl-hydroxyethylcellulose (MHEC)
einer Viskosität von etwa 6.000 mPa·s und im erfindungsgemäßen Beispiel als quellfähiges Hydrokolloid in einer
Teilchengröße von kleiner etwa 0,5 mm eine mit Bisacrylamidoessigsäure vernetzte Natrium-carboxymethylcellulose
eines WRV von etwa 6.700, eines WUA von etwa 64 und eines
DS von etwa 1,0 eingesetzt werden.

| Komponenten | Gew.-Teile im | |
| --- | --- | --- |
| | Vergl.Bsp. V 3 | Bsp. 4 |
| Wasser | 60 | 60 |
| Konservierungsmittel auf Basis von N-Methylol-chloracetamid | 2 | 2 |
| Na-Polyphosphat (10 %ig in $H_2O$) als Dispergiermittel | 12 | 12 |
| Entschäumer auf Mineralölbasis | 2 | 2 |
| MHEC | 2 | - |
| quellfähiges Hydrokolloid | - | 2 |
| konz. wäßrige $NH_3$-Lösung | 2 | 2 |
| 50 Gew.-%ige wäßrige Copolymerisat-Dispersion (siehe Bsp. 1) | 250 | 250 |
| $TiO_2$ | 60 | 60 |
| Calcit, 5 μm Durchmesser | 120 | 120 |
| China Clay | 25 | 25 |
| Calcit, 350 μm | 60 | 60 |
| Calcit, 350 - 700 μm | 350 | 350 |

HOECHST AKTIENGESELLSCHAFT
KALLE Niederlassung der Hoechst AG

- 18 -

| Komponenten | Gew.-Teile im | |
|---|---|---|
| | Vergl.Bsp. V 3 | Bsp. 4 |
| Calcit, 500 - 1.500 $\mu$m | 40 | 40 |
| Butyldiglykolacetat | 4 | 4 |
| Testbenzin | 7 | 7 |
| Dibutylphthalat | 4 | 4 |

Der erfindungsgemäße Rollputz läßt sich nach Aufbringen auf Unterlagen mit Rollen oder Spachteln gut strukturieren, die erzielbare Struktur wirkt markanter als die aus nach dem Stand der Technik hergestellter Masse.

Beispiel 5 und Vergleichsbeispiel V 4

Eine nach Beispiel 1 hergestellte Spachtelmasse enthält - in Abwandlung - als quellfähiges Hydrokolloid 2 Gew.-Teile einer mit Dichloressigsäure vernetzten Natrium-carboxymethylcellulose einer Teilchengröße von kleiner etwa 0,2 mm, eines WRV von 1.700, eines WUA von etwa 88 und eines DS von etwa 0,6, als Verdicker 3 Gew.-Teile der im Bsp. angegebenen MHEC und 50 Gew.-Teile der Copolymerisat-Dispersion. Der Beschichtungskeil bleibt gut stehen und zeigt keine Risse, der Wasserretentionswert beträgt 29 sec. Eine gleichartig aufgebaute Spachtelmasse ohne quellfähiges Hydrokolloid und mit 5 Gew.-Teilen der MHEC (V 4) zeigt im Beschichtungskeil ein Nachfließen an den Kanten und einige Risse, der Wasserretentionswert beträgt 31 sec.

HOECHST AKTIENGESELLSCHAFT
KALLE Niederlassung der Hoechst AG

- 19 -

Vergleichsbeispiele V 5 und V 6

Eine nach Beispiel 1 hergestellte Spachtelmasse enthält - in Abwandlung - anstelle des quellfähigen Hydrokolloids bzw. des Verdickers 4 Gew.-Teile an Cellulosefasern einer Länge von kleiner etwa 0,2 mm (V 5), die Konsistenz der Masse ist jedoch unbefriedigend, d.h. die Masse ist zu dünnflüssig. Auch eine gleichartig aufgebaute Masse mit 4 Gew.-Teile Polyethylenfasern einer Länge von etwa 1 mm (V 6) hat keine für die Praxis ausreichende Konsistenz.

Beispiele 6, 7, 8, 9 und 10

Nach Beispiel 1 hergestellte Spachtelmassen enthalten - in Abwandlung - als quellfähiges Hydrokolloid eine thermisch vernetzte Natrium-carboxymethylcellulose einer Teilchengröße von kleiner etwa 0,7 mm, eines WRV von etwa 1.200, eines WUA von etwa 85 und eines DS von etwa 0,7 (Bsp. 6), eine mit Epichlorhydrin vernetzte Natrium-carboxymethylcellulose einer Teilchengröße von kleiner etwa 0,5 mm, eines WRV von etwa 2.500, eines WUA von etwa 73 und eines DS von etwa 0,8 (Bsp. 7), ein mit Bisacrylamidoessigsäure vernetztes Copolymeres aus Acrylsäure und Acrylamid einer Teilchengröße von kleiner etwa 0,3 mm, eines WRV von etwa 70.000 und eines WUA von größer als 90 (Bsp. 8), eine mit Epichlorhydrin vernetzte Natriumcarboxymethylstärke einer Teilchengröße von kleiner etwa 0,8 mm, eines WRV von etwa 8.000, eines WUA von etwa 85 und eines DS von etwa 0,7 (Bsp. 9) oder eine Natrium-carboxymethylcellulose einer Teilchengröße von kleiner etwa 0,9 mm, eines WRV von etwa 2.000, eines WUA von 35 und eines DS von etwa 0,25 (Bsp. 10). Alle Spachtelmassen

HOECHST  AKTIENGESELLSCHAFT
KALLE  Niederlassung der Hoechst AG

- 20 -

sind pastös und lassen sich in etwa wie die Spachtelmasse des Bsp. 1 verarbeiten.

--------

HOECHST AKTIENGESELLSCHAFT
KALLE Niederlassung der Hoechst AG

Hoe 80/K 015          - 21 -          17. März 1981
                                      WLK-Dr.I.-dg

Patentansprüche

1. Beschichtungsmasse wie kunstharzgebundener Putz,
plastische Masse oder Spachtelmasse auf der Basis von in
Wasser dispergierbarem Bindemittel, Zuschlagstoffen, Verdickungsmittel und gegebenenfalls weiteren Zusätzen und
Hilfsstoffen, dadurch gekennzeichnet, daß sie ein kleinteiliges, zu mindestens 30 Gew.-% wasserunlösliches,
quellfähiges organisches Hydrokolloid aus der Gruppe
Polysaccharid-, Polyalkylenoxid-, Polyvinyl- und Polyacrylderivate enthält.

2. Beschichtungsmasse nach Anspruch 1, dadurch gekennzeichnet, daß sie ein durch eine Reaktion mit einer
chemischen Verbindung, durch Strahlung oder durch Wärme
bedingte Vernetzung oder durch Pfropfung modifiziertes
Hydrokolloid enthält.

3. Beschichtungsmasse nach Anspruch 1, dadurch gekennzeichnet, daß sie ein Hydrokolloid enthält, dessen Substituenten einen Substitutionsgrad aufweisen, der den Grad
der Wasserunlöslichkeit des Hydrokolloids bewirkt.

4. Beschichtungsmasse nach Anspruch 1 oder 2, dadurch
gekennzeichnet, daß das Hydrokolloid ein vernetzter Cellulose- oder Stärkeether, ein vernetzter Polyvinylether,
ein vernetztes Polyacrylamid, vernetzte Polyacrylsäure
und deren Salze, ein vernetztes Copolymeres auf Basis
von Acrylsäure und/oder Acrylamid oder ein gepfropftes
Stärkederivat ist.

HOE·CHST AKTIENGESELLSCHAFT
KALLE Niederlassung der Hoechst AG

- 22 -

5. Beschichtungsmasse nach Anspruch 1 oder 3, dadurch gekennzeichnet, daß das Hydrokolloid ein Celluloseether ist.

6. Beschichtungsmasse nach Anspruch 1, 2 oder 4, dadurch gekennzeichnet, daß das Hydrokolloid ein vernetzter Celluloseether ist.

7. Beschichtungsmasse nach einem der Ansprüche 1 bis 6, dadurch gekennzeichnet, daß sie 0,02 bis 2 Gew.-Teile, bezogen auf 100 Gew.-Teile der gesamten Beschichtungsmasse, des Hydrokolloids enthält.

8. Verfahren zur Herstellung einer Beschichtungsmasse wie eines kunstharzgebundenen Putzes, einer plastischen Masse oder Spachtelmasse aus in Wasser dispergierbarem Bindemittel, Zuschlagstoffen, Verdickungsmittel und gegebenenfalls weiteren Zusätzen und Hilfsstoffen, dadurch gekennzeichnet, daß man ein kleinteiliges, zu mindestens 30 Gew.-% wasserunlösliches, quellfähiges organisches Hydrokolloid aus der Gruppe Polysaccharid-, Polyalkylenoxid-, Polyvinyl- und Polyacrylderivate zusetzt.

------